# EUROPEAN PATENT APPLICATION

(11) **EP 4 661 171 A1**
(43) Date of publication of application: **10.12.2025**
(21) Application number: 24179687.9
(22) Date of filing: 03.06.2024
(51) Int. Cl.: H01M 50/15, H01M 50/249, H01M 50/30, H01M 50/342, H01M 50/358, H01M 50/367

(54) **BATTERY CELL LID ASSEMBLY FOR A BATTERY CELL OF A VEHICLE, BATTERY CELL, FILLER MATERIAL COMPONENT, BATTERY PACK, VEHICLE AND METHOD**

(71) Applicant: Volvo Car Corporation, 405 31 Göteborg (SE)
(72) Inventor: WERBERG, Leopold, 40531 Göteborg (SE); PERSSON, Klas, 40531 Göteborg (SE)
(74) Representative: Maiwald GmbH

(57) **Abstract**

The disclosure relates to a battery cell lid assembly (20) for a battery cell of a vehicle. The battery cell lid assembly (20) comprises a carrier plate (24), a first protection wall (28), and a second protection wall (30). The carrier plate (24) comprises a first side (34), a second side (36), and a through hole (38) for a degassing vent (26). The through hole (38) extends from the first side (34) to the second side (36). The first protection wall (28) is mechanically connected to the first side (34) and covers the through hole (38). The second protection wall (30) is mechanically connected to the second side (36) and covers the through hole (38). The first protection wall (28) and the second protection wall (30) are arranged at a distance (A). Additionally, a battery cell for a vehicle is described. Furthermore, a filler material component for a battery cell lid assembly (20), a battery pack and a vehicle are shown. Also, a method for manufacturing a battery cell lid assembly (20) for a battery cell of a vehicle is described.

## Description

### TECHNICAL FIELD

The present disclosure relates to a battery cell lid assembly for a battery cell of a vehicle.

Moreover, the present disclosure is directed to battery cell for a vehicle.

Additionally, the present disclosure relates to a filler material component for a battery cell lid assembly.

The present disclosure also is directed to a battery pack and a vehicle.

Furthermore, the present disclosure is directed to method for manufacturing a battery cell lid assembly for a battery cell of a vehicle.

### BACKGROUND ART

Recent developments in the field of battery electric vehicles show that the energy density in battery systems increases. More aggressive cell chemistries are used and the system voltages increase while the sizes of the battery systems shall be reduced. Safety features of battery cells need to be adapted accordingly.

### SUMMARY

It is therefore an objective of the present disclosure to provide a battery cell providing enhanced safety.

The problem is at least partially solved or alleviated by the subject matter of the independent claims of the present disclosure, wherein further examples are incorporated in the dependent claims.

According to a first aspect, there is provided a battery cell lid assembly for a battery cell of a vehicle. The battery cell lid assembly comprises:
- a carrier plate comprising a first side, a second side, and a through hole for a degassing vent, the through hole extending from the first side to the second side,
- a first protection wall arranged on the first side and at least partially covering the through hole, and
- a second protection wall arranged on the second side and at least partially covering the through hole.
The first protection wall and the second protection wall are arranged at a distance.

The battery cell lid assembly may be understood as a cover part for a battery cell. For example, the battery cell lid assembly may be configured to close a so-called cell can or cell pouch. This means that the battery cell lid assembly may form a portion of a cell enclosure. The first side and the second side of the carrier plate are arranged opposite to one another. Further, the distance between the first protection wall and the second protection wall corresponds to a distance that is generally larger than zero. Thus, the first protection wall and the second protection wall enclose a space of a certain volume, the volume being larger than zero. At the same time the first protection wall and the second protection wall may form part of a degassing vent. This means that the first protection wall and the second protection wall are configured to open, i.e. to fluidically connect the first side and the second side of the carrier plate. In case the battery cell lid assembly is used in a battery cell, this means that an interior of the battery cell is fluidically connected to an exterior of the battery cell. Moreover, the first protection wall and the second protection wall may be configured to open if subject to a certain pressure or force. Consequently, using the first protection wall and the second protection wall, an interior of a battery cell may be fluidically connected to an exterior of the battery cell in case a pressure in the interior exceeds a predefined pressure threshold. In this context, an increase in pressure may be due to a thermal event happening in the battery cell. Additionally, the first protection wall and the second protection wall are configured to protect the battery cell lid assembly and the battery cell in which they are used in a situation in which a battery cell in their surroundings undergoes a thermal event. In such a situation, the first protection wall and the second protection wall protect an interior of the battery cell on which they are used from environmental conditions following a thermal event of another battery cell. This effect relies on the space provided between the first protection wall and the second protection wall which provides thermal insulation. Thus, propagation of the thermal event is stopped. This has the effect that the durability and safety of the battery cell is enhanced.

In the context of the present disclosure, the battery cell may be a battery cell for a traction battery of the vehicle. Consequently, the battery cell lid assembly may be a component for a traction battery of the vehicle.

According to an example, the first protection wall is mechanically connected to the first side and/or the second protection wall is mechanically connected to the second side. Consequently, the first protection wall and/or the second protection wall are reliably held on the associated side of the carrier plate. The mechanical connection may be realized by any suitable means, e.g. by a weld seam, a soldering seam, an adhesive seam, a clamping connection, one or more screws etc.

According to an example, the first protection wall fully covers the through hole. This has the effect that the durability and safety of the battery cell is further enhanced.

According to another example, the second protection wall fully covers the through hole. This has the effect that the durability and safety of the battery cell is further enhanced.

According to an example, the first protection wall and/or the second protection wall comprise a protection sheet. This means that the first protection wall and/or the second protection wall are comparatively thin as compared to their extension in a length and width direction. Such a first protection wall and/or second protection wall is compact and lightweight. Moreover, the above-described functionality of opening if the associated battery cell undergoes a thermal event, but protecting the interior of the battery cell if another battery cell undergoes a thermal event, may be reliably realized if the first protection wall and/or the second protection wall comprise a protection sheet.

In an example, the first protection wall and/or the second protection wall may comprise a metal material. Such a material is comparatively robust. This also applies in an environment of comparatively high temperature. Thus, the safety of the battery cell equipped with such a battery cell lid assembly is further improved.

In an example, the distance between the first protection wall and the second protection wall is less than 4 mm, less than 3 mm, or less than 2 mm, or any other distance starting larger than 0.1 mm. It has been found that such distances lead to a good compromise between the thermal insulation effect provided by the distance and a compact design of the battery cell lid assembly.

According to an example, the battery cell lid assembly further comprises a reinforcement member for the through hole. The reinforcement member circumferentially delimits the through hole. The first protection wall and the second protection wall are mechanically connected to the reinforcement member. The reinforcement member may be formed as a separate reinforcement component or as a feature of the carrier plate. In both cases, the first protection wall and the second protection wall are mechanically connected to the respective first side and second side of the carrier plate via the reinforcement member. In this context, the reinforcement member may protrude from the edge of the through hole in the normal direction of the first side and/or in the normal direction of the second side of the carrier plate. Thus, the distance between the first protection wall and the second protection wall may depend on the dimension of the reinforcement member at least along a direction associated with the distance. Thus, the reinforcement member may be used to impose a distance between the first protection wall and the second protection wall. Moreover, the reinforcement member may serve as a reliable means to connect the first protection wall and/or the second protection wall to the carrier plate. Altogether, the mechanical stability and the reliable functionality of the battery cell lid assembly is enhanced.

According to an example, a space between the first protection wall and the second protection wall is filled with a gas. The gas may be ambient air. The gas may be a single gas or a mixture of multiple gases. The gas may serve as a thermal insulator. This means that the gas may have a low thermal conductivity, so that heat may travel slowly through the gas. Thus, in case of a thermal event in an adjacent battery cell, gas acting as a thermal insulator may increase safety of the battery cell equipped with the battery cell lid assembly.

According to an example, a space between the first protection wall and the second protection wall is filled with at least one liquid, solid or gel-type filler material. The at least one liquid, solid or gel-type filler material may comprise one or more of a flexible foam, wax, polymer, fiberglass, cloth, wool, down, or materials alike. Alternatively, the at least one liquid, solid or gel-type filler material may be a combination of multiple materials. In an example, glass fibers may be added to one or more of a foam, wax, polymer, or cloth. In another example, at least two liquids, solids or gel-type filler materials may be stacked in order to form individual material layers inside the space provided between the first protection wall and the second protection wall. The liquid, solid or gel-type filler material may act as a thermal insulator and, thus, may increase safety of the battery cell.

According to an example, the at least one filler material comprises an endothermic material. This means that the at least one filler material is able to absorb energy when changing its physical and/or chemical state. An example of changing a physical state is changing a state of aggregation. An example of changing a chemical state is undergoing a chemical reaction. The at least one filler material may partially or completely melt when exposed to head, e.g. following a thermal event of an adjacent battery cell. Thus, the endothermic material further enhances the thermal insulation properties. Consequently, safety is further enhanced.

According to an example, the at least one filler material comprises an intumescent material. In this context, an intumescent material is a material that swells when exposed to heat. The at least one filler material may have a carbonization property. Such materials become highly porous and swell when exposed to heat. This has the effect that the safety of the battery cell using the battery cell lid assembly is further improved.

According to an example, the first protection wall comprises at least one predetermined mechanical breaking location and/or at least one mechanical reinforcement element. Additionally or alternatively, the second protection wall comprises at least one predetermined mechanical breaking location and/or at least one mechanical reinforcement element. The predetermined mechanical breaking location may be understood as a portion that is configured to break or rupture first if the associated first protection wall and/or second protection wall is subject to a mechanical load exceeding a predefined load threshold. Such a predetermined mechanical breaking location may be formed as a deformed portion of the first protection wall and/or the second protection wall. The mechanical breaking location may be point-shaped, line shaped, two-dimensional or three-dimensional. This has the effect that, in case of a thermal event in the battery cell equipped with the battery cell lid assembly, the first protection wall and/or the second protection wall may reliably break. This enhances the functionality of the degassing vent. The at least one mechanical reinforcement element may be understood as a portion of the first protection wall and/or the second protection wall locally increasing a mechanical resistance or load bearing capacity. Such a reinforcement element may as well be realized by a deformed portion of the first protection wall and/or the second protection wall. This has the effect that the first protection wall and/or the second protection wall may withstand loads of higher magnitude and/or during a longer time. In other words, the mechanical stability and durability of the battery cell lid assembly and thus, of the battery cell equipped therewith, may be enhanced.

In an example, the mechanical breaking location may be realized by a surface indentation. The surface indentation may be a groove, slit, or other shaping alike to decrease the mechanical strength of the first protection wall and/or the second protection wall.

According to an example, one of the first protection wall and the second protection wall is permeable for gases and/or liquids. This means that gases and/or liquids may migrate through the first protection wall. Alternatively or additionally, gases and/or liquids may migrate through the second protection wall. This has the effect that pressure differences between the first protection wall and the second protection wall may be prevented. Additionally or alternatively, pressure differences between the space between the first protection wall and the second protection wall and an exterior thereof may be avoided. Thus, the lifetime of the battery cell lid assembly may be enhanced.

According to an example, at least one of the first protection wall and the second protection wall is impermeable for gases and/or liquids. This means that gases and/or liquids may not migrate through the first protection wall. Additionally or alternatively, gases and/or liquids may not migrate through the second protection wall. Thus, a battery cell equipped with the battery cell lid assembly may be reliably protected from heat, particles, gases and liquids e.g. resulting from a thermal event.

According to an example, at least one of the first protection wall and the second protection wall is connected to the carrier plate via a laser weld. This has the effect that the first protection wall and/or the second protection wall is securely mechanically connected to the carrier plate. The first protection wall may be sealed to the carrier plate in a gas-tight and/or liquid-tight manner. Additionally or alternatively, the second protection wall may be sealed to the carrier plate in a gas-tight and/or liquid-tight manner. Thus, the reliability of the battery cell lid assembly is enhanced.

According to a second aspect, there is provided a battery cell for a vehicle. The battery cell comprises:
- an enclosure portion, wherein the enclosure portion has an opening, and
- a battery cell lid assembly according to the first aspect, wherein the battery cell lid assembly is mechanically connected to the enclosure portion such that the battery cell lid assembly closes the opening of the enclosure portion.

In this context, an enclosure portion having an opening may be cup-shaped or pouch-shaped. This implies that the enclosure portion encloses a volume on at least three sides and has at least one open side. In an example, the enclosure portion has five sides closed and one side open. The cup-shaped enclosure portion may comprise a cylindrical shape, a prismatic shape, a cuboid shape, or any other shape alike. As has been explained before, the first protection wall and the second protection wall are configured to open, i.e. to fluidically connect the first side and the second side of the carrier plate. This means that an interior of the battery cell may be fluidically connected to an exterior of the battery cell. Moreover, the first protection wall and the second protection wall may be configured to open if subject to a certain pressure or force. Consequently, using the first protection wall and the second protection wall, an interior of a battery cell may be fluidically connected to an exterior of the battery cell in case a pressure in the interior exceeds a predefined pressure threshold. In this context, an increase in pressure may be due to a thermal event happening in the battery cell. Additionally, the first protection wall and the second protection wall are configured to protect the battery cell lid assembly and the battery cell in a situation in which a battery cell in their surroundings undergoes a thermal event. In such a situation, the first protection wall and the second protection wall protect an interior of the battery cell on which they are used from environmental conditions following a thermal event of another battery cell. This effect relies on the space provided between the first protection wall and the second protection wall which provides thermal insulation. Thus, propagation of the thermal event is stopped. This has the effect that the durability and safety of the battery cell is enhanced.

According to a third aspect, there is provided a filler material component for a battery cell lid assembly according to the first aspect. The filler material component comprises a sheet or block of filler material. The filler material is one or more of thermally insulative, intumescent, and endothermic. A sheet of filler material may be understood as a thin layer of filler material. A block of filler material may correspond to a portion of filler material that extends in three dimensions. The fact that the filler material component is for a battery cell lid assembly according to the first aspect means that the filler material component may be configured to fit in the space between a first protection wall and a second protection wall. The fact that the filler material may be thermally insulative means that the filler material component may have a low thermal conductivity, so that heat may be transferred slowly through the filler material component. Thus, in case of a thermal event, the filler material acting as a thermal insulator may increase safety of the battery cell. The fact that the filler material may be intumescent means that the filler material swells when subject to heat. This has the effect that the safety of the battery cell is further improved. The fact that the filler material is endothermic means that the filler material may absorb energy when changing its physical state or its chemical state. Thus, the filler material with an endothermic property may increase safety of the battery cell.

According to a fourth aspect, there is provided a battery pack. The battery pack comprises at least one battery cell according to the present disclosure. In an example, the battery pack comprises a plurality of battery cells according to the present disclosure. The battery cells may be arranged or stacked along one or more directions of arrangement. Moreover, all battery cells of the battery pack may have the same orientation such that the cell lids of the battery packs are all arranged on the same side of the battery pack. As has been mentioned before, using the first protection wall and the second protection wall on the battery cell lid, an interior of a battery cell may be fluidically connected to an exterior of the battery cell in case a pressure in the interior exceeds a predefined pressure threshold. In this context, an increase in pressure may be due to a thermal event happening in the battery cell. Additionally, the first protection wall and the second protection wall are configured to protect the battery cell lid assembly and thus the battery cells of the battery pack in a situation in which a battery cell in their surroundings undergoes a thermal event. In such a situation, the first protection wall and the second protection wall protect an interior of the battery cell on which they are used from environmental conditions following a thermal event of another battery cell. This effect relies on the space provided between the first protection wall and the second protection wall which provides thermal insulation. Thus, propagation of the thermal event is stopped. This has the effect that the durability and safety of the battery cell is enhanced. Consequently, also the durability and safety of the battery pack is enhanced.

According to a fifth aspect, there is provided a vehicle. The vehicle comprises a battery pack according to the present disclosure. As has been explained above, the battery pack according to the present disclosure has an enhanced durability and safety. The same applies to a vehicle equipped with such a battery pack.

According to a sixth aspect, there is provided a method for manufacturing a battery cell lid assembly for a battery cell of a vehicle. The method comprises:
- providing a carrier plate comprising a first side, a second side, and a through hole for a degassing vent, the through hole extending from the first side to the second side,
- mechanically connecting a first protection wall to the first side of the carrier plate such that the first protection wall at least partially covers the through hole, and
- mechanically connecting a second protection wall to the second side of the carrier plate such that the second protection wall at least partially covers the through hole, and such that the first protection wall and the second protection wall are arranged at a distance.

In this context, the first protection wall may be sealed to the carrier plate. Also, the second protection wall may be sealed to the carrier plate. In other words, the first protection wall and the second protection wall are firmly mounted to the first side and the second side, respectively. Due to the fact that the first protection wall and the second protection wall are arranged at a distance, the battery cell lid assembly and the battery cell in which they are used are protected from environmental conditions following a thermal event of another battery cell in their surroundings. This effect relies on the space provided between the first protection wall and the second protection wall which provides thermal insulation.

According to an example, the first protection wall fully covers the through hole. This has the effect that the durability and safety of the battery cell is further enhanced.

According to another example, the second protection wall fully covers the through hole. This has the effect that the durability and safety of the battery cell is further enhanced.

According to an example, the method further comprises providing at least one filler material. The at least one filler material is positioned between the first protection wall and the second protection wall. It is to be noted that there may be two alternatives to achieve that the at least one filler material is positioned between the first protection wall and the second protection wall. According to a first alternative, the first protection wall is mechanically connected to the first side of the carrier plate. Thereafter, the at least one filler material is positioned on the first protection wall and subsequently, the second protection wall is mechanically connected to the second side of the carrier plate. According to a second alternative the second protection wall is mechanically connected to the second side of the carrier plate. Afterwards, the at least one filler material is positioned on the second protection wall. Subsequently, the first protection wall is mechanically connected to the first side of the carrier plate. As has been mentioned before, the filler material enhances the thermal insulation properties provided in the space between the first protection wall and the second protection wall. In other words, the at least one filler material acts as a thermal insulator, which may increase safety of the battery cell.

According to an example, the method further comprises curing the filler material. This is necessary if the filler material requires curing to achieve its final material properties for being used as filler material in the battery cell lid assembly. In this context, curing may be understood as hardening. This has the effect that the production of the battery cell lid assembly may be facilitated and manufacturing costs may be reduced. This is because the curing of the filler material may take place while the first protection wall and the second protection wall are mechanically connected to the carrier plate and the filler material is already positioned between the first protection wall and the second protection wall. This means that the filler material may be self-curing without any further processing steps. In an example, the filler material may be cured by external heat treatment. Moreover, adhesive effects may occur between the filler material and both the first and the second protection wall. Thus, the durability of the battery cell lid assembly and thus, the stability of the battery cell is enhanced. Also, the safety of the battery cell in case of a thermal event is further improved.

As has been mentioned before, the filler material may comprise a sheet or block. The filler material may be one or more of thermally insulative, intumescent, and endothermic.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle having a battery pack according to the present disclosure comprising a plurality of battery cells according to the present disclosure, each of the battery cells having a battery cell lid assembly according to the present disclosure, wherein the cell lid assemblies are manufactured using a method according to the present disclosure,
- Figure 2: schematically shows the battery assembly of Figure 1 in a more detailed view, wherein a thermal event occurs in one of the battery cells,
- Figure 3: shows the battery cell according to the present disclosure comprising the battery cell lid assembly according to the present disclosure and a filler material component according to the present disclosure in a more detailed view,
- Figure 4: shows a sectional view along plane IV-IV of the battery cell of Figure 3,
- Figure 5: shows an example of the battery cell lid assembly, where a space between a first protection wall and a second protection wall is filled with gas,
- Figure 6: shows another example of the battery cell lid assembly, where the space between the first protection wall and the second protection wall is filled with an integral filler material,
- Figure 7: shows another example of the battery cell lid assembly, where the space between the first protection wall and the second protection wall is filled with a combination of two filler materials,
- Figure 8: shows another example of the battery cell lid assembly, where the space between the first protection wall and the second protection wall is filled with two layers of two different sheets of filler materials,
- Figure 9: shows another example of the battery cell lid assembly, where the space between the first protection wall and the second protection wall is filled with a plurality of layers of different sheets of filler materials,
- Figure 10: shows another example of the battery cell lid assembly, where the space between the first protection wall and the second protection wall is filled with a liquid filler material,
- Figure 11: shows another example of the battery cell lid assembly, where the first protection wall comprises a mechanical reinforcement element,
- Figure 12: shows another example of the battery cell lid assembly, where the first protection wall comprises a predetermined mechanical breaking location,
- Figure 13: shows another example of the battery cell lid assembly, where the second protection wall is permeable for gases and liquids,
- Figure 14: shows another example of the battery cell lid assembly, where the second protection wall is permeable for gases,
- Figure 15: shows another example of the battery cell lid assembly, where the first protection wall comprises a mechanical reinforcement element and a predetermined mechanical breaking location and the second protection wall is permeable for gases,
- Figure 16: shows the battery cell lid assembly of Figure 6 in a slightly bent state,
- Figure 17: shows the battery cell lid assembly of Figures 6 and 17 in a strongly bent state, and
- Figure 18: illustrates steps of the method according to the present disclosure for manufacturing a battery cell lid assembly for a battery cell of a vehicle.

### DETAILED DESCRIPTION

The Figures are merely schematic representations and serve only to illustrate examples of the disclosure. Identical or equivalent elements are in principle provided with the same reference signs.

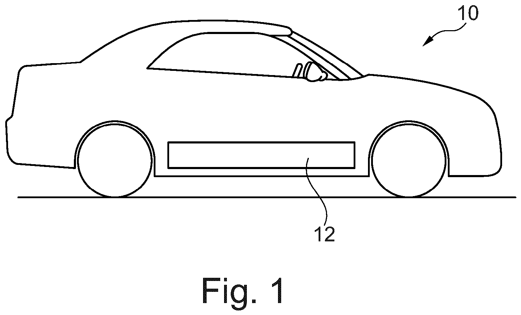

Figure 1 shows a vehicle 10 that comprises a battery pack 12. The battery pack 12 is part of a drive unit. In other words, the battery pack 12 forms a traction battery of the vehicle 10. Consequently, in the present example, the vehicle 10 is a battery electric vehicle.

The battery pack 12 may alternatively be called a battery assembly.

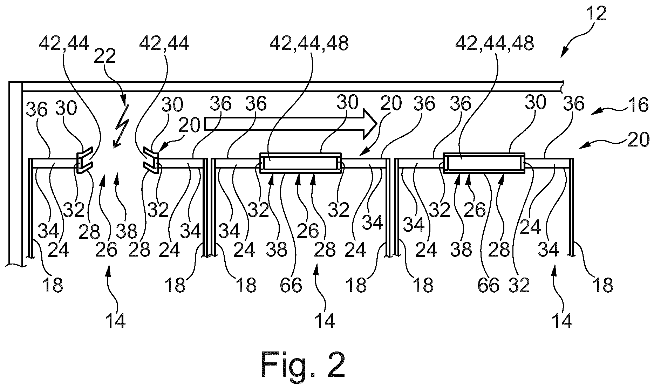

A portion of the battery pack 12 is shown in Figure 2.

The battery pack 12 comprises a plurality of battery cells 14 which are arranged side-by-side along a stacking direction. In Figure 2, three representative battery cells 14 are shown.

In the present example, the battery cells 14 are so-called prismatic battery cells. This means that the battery cells 14 have an essentially cuboid shape.

Each battery cell 14 comprises a cup-shaped enclosure portion 18 and a battery cell lid assembly 20.

The battery cell lid assembly 20 is mechanically connected to the enclosure portion 18 such that the battery cell lid assembly 20 closes the enclosure portion 18. Together, the battery cell lid assembly 20 and the enclosure portion 18 enclose a space where electrodes and electrolyte of the battery cell 14 are kept.

Each of the battery cells 14 comprises a degassing vent 26 which is configured to break in case the associated battery cell 14 undergoes a thermal event that leads to comparatively high pressure inside the battery cell 14, i.e. inside the space delimited by the enclosure portion 18 and the battery cell lid assembly 20.

In case of such a thermal event, hot gases and particles leave the interior of the battery cell 14 via the degassing vent 26.

In order to be able guide these gases and particles to an environment, the battery assembly comprises a gas channel 16. The degassing vents 26 of each of the battery cells 14 are fluidically connected to the gas channel 16.

In Figure 2, the battery cell represented on the left is assumed to have undergone a thermal event which is illustrated by a flash symbol. Consequently, the degassing vent 26 is represented in an open state. The direction along which the hot gases and particles may be guided by the gas channel 16 is indicated by an arrow.

In order to avoid a so-called propagation of the thermal event, i.e. in order to avoid that the thermal event of one battery cell 14 leads to a thermal event of another battery cell 14, the degassing vents 26 of the remaining battery cells 14 need to be kept in the closed state. In the example of Figure 2, the degassing vents 26 of the battery cell 14 represented in the middle and on the right need to be kept in a closed state.

This is ensured by the design of the battery cell lid assembly 20 which will be explained in more detail in the following.

The battery cell lid assembly 20 comprises a carrier plate 24 on which the degassing vent 26 is provided.

The carrier plate 24 comprises a first side 34, a second side 36, and a through hole 38. The through hole 38 extends from the first side 34 to the second side 36 and serves as a basis for the degassing vent 26.

A reinforcement member 32 circumferentially delimits the through hole 38.

A first protection wall 28 is mechanically connected to the first side 34 and covers the through hole 38. More precisely, the first protection wall 28 is connected to the first side 34 via the reinforcement member 32. In the present example, the first protection wall 28 is connected to the reinforcement member 32 via a laser weld 40.

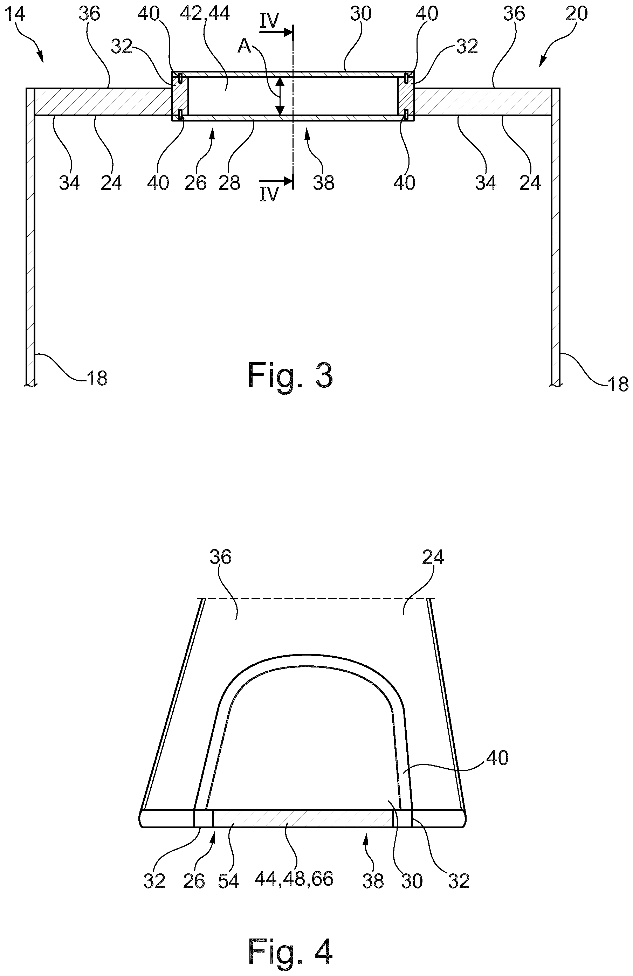

A second protection wall 30 is mechanically connected to the second side 36 and also covers the through hole 38 (see also Figure 4). More precisely, the second protection wall 30 is connected to the second side 36 via the reinforcement member 32. In the present example, the second protection wall 30 is connected to the reinforcement member 32 via a laser weld 40.

The first protection wall 28 and the second protection wall 30 are arranged at a distance A. In the present example, this distance A is defined by a dimension of the reinforcement member 32.

A space 42 is formed between the first protection wall 28 and the second protection wall 30.

The space 42 between the first protection wall 28 and the second protection wall 30 can generally be filled with at least one filler material 44. The filler material 44 may be a sheet 46 or a block 48 of filler material 44. Further, the filler material 44 generally may be gas 50, liquid 52, solid 54 or gel-type 56. Also combinations thereof are possible.

The filler material 44 is thermally insulative, intumescent, and/or endothermic.

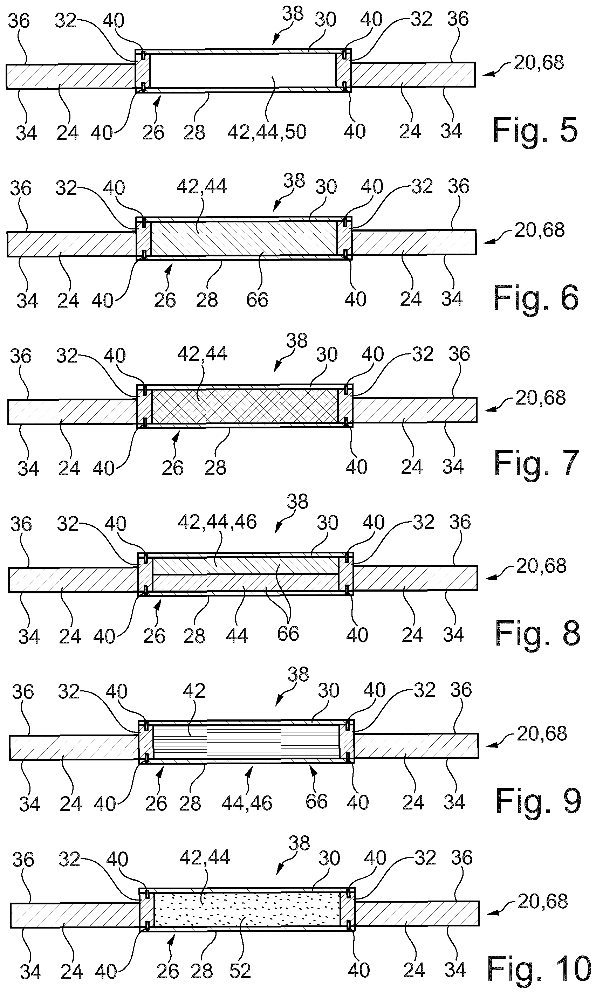

In the following, six examples of the battery cell lid assembly 20 will be described with reference to Figures 5 to 10.

Figure 5 shows a detail of the battery cell lid assembly 20 of Figure 3. In this example the space 42 between the first protection wall 28 and the second protection wall 30 is filled with gas 50, e.g. ambient air.

Figure 6 shows another example of the battery cell lid assembly 20, where the space 42 is filled with a filler material 44, e.g. a polymer. The polymer may be provided in the form of a polymer foam or a solid body.

Figure 7 shows another example of the battery cell lid assembly 20, where the space 42 is filled with a combination of two filler materials 44. In this context, combination means mixture.

Another example of the battery cell lid assembly 20 is shown in Figure 8, where the space 42 between the first protection wall 28 and the second protection wall 30 is filled with two layers of two different sheets 46 of filler materials 44. For example, two different polymers may be used.

Figure 9 further depicts another example of the battery cell lid assembly 20, where the space 42 is filled with a plurality of layers of different sheets 46 of filler materials 44.

Yet, in another example of the battery cell lid assembly 20, the space 42 between the first protection wall 28 and the second protection wall 30 is filled with a liquid 52. This means that the liquid 52 is the filler material 44 (see Figure 10). Alternatively, the space 42 is filled with a gel-type 56 filler material 44.

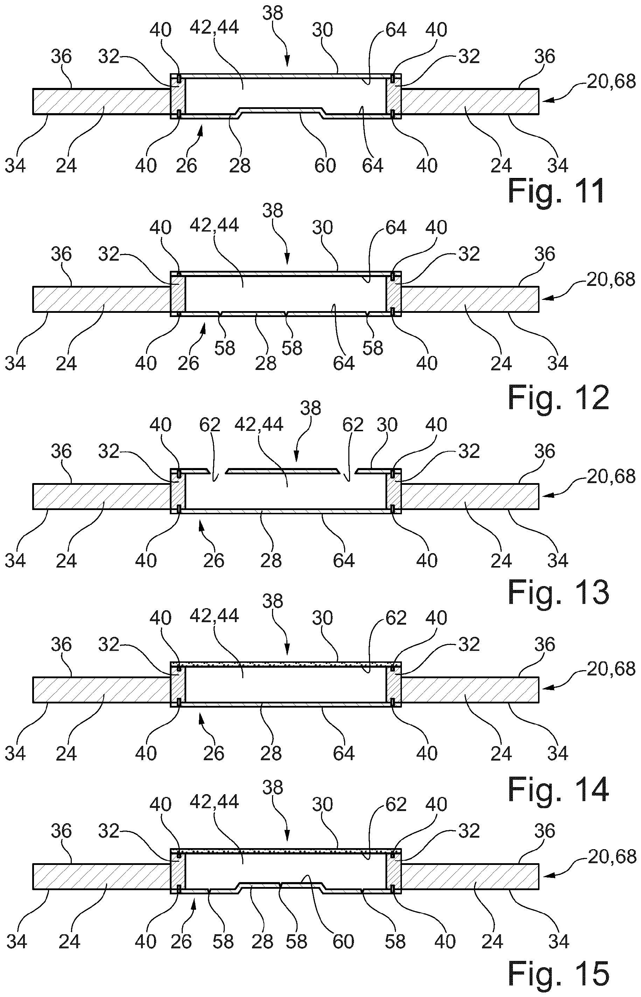

The first protection wall 28 and the second protection wall 30 may be designed in accordance with several examples which will be explained in the following with reference to Figures 11 to 15.

Generally speaking, the first protection wall 28 and/or the second protection wall 30 can comprise at least one predetermined mechanical breaking location 58 and/or at least one mechanical reinforcement element 60. Further, the first protection wall 28 and/or the second protection wall 30 is generally either permeable or impermeable for gases and/or liquids.

In the examples as explained in connection with Figures 1 to 10 neither the first protection wall 28 nor the second protection wall 30 comprises a predetermined mechanical breaking location 58 or a mechanical reinforcement element 60.

Figure 11 shows another example of the battery cell lid assembly 20, where the first protection wall 28 comprises a mechanical reinforcement element 60. In this example, the mechanical reinforcement element 60 is formed by a depression.

Figure 12 shows another example of the battery cell lid assembly 20, where the first protection wall 28 comprises a predetermined mechanical breaking location 58. In this example, the predetermined mechanical breaking location 58 is realized by a local reduction in thickness of the first protection wall 28. This may be achieved by providing one or more blind holes, grooves or slots on the first protection wall 28.

Another example of the battery cell lid assembly 20 is shown in Figure 13. In this example the second protection wall 30 is permeable for gases and liquids. In the example of Figure 13, the permeability is realized by a plurality of through holes in the second protection wall 30. It is noted that in such a case, the through holes need to be sized such that the permeability is ensured, but at the same time the second protection wall 30 still provides protection against the propagation of thermal events.

Figure 14 shows another example of the battery cell lid assembly 20, where the second protection wall 30 is permeable for gases. In this example, the material of the second protection wall 30 is chosen which is permeable for gases.

Yet, in another example of the battery cell lid assembly 20, the first protection wall 28 comprises a mechanical reinforcement element 60 and a predetermined mechanical breaking location 58. Further, the second protection wall 30 is permeable for gases (see Figure 15). Moreover, in this example, the second protection wall 30 is permeable for gases.

In other words, the example of Figure 15 is a combination of the examples of Figures 11, 12, and 14.

It is noted that also other combinations of the examples of Figures 11 to 15 are possible.

Moreover, any one or more of the examples of Figures 5 to 10 may be combined with any one of more of the examples of Figures 11 to 15.

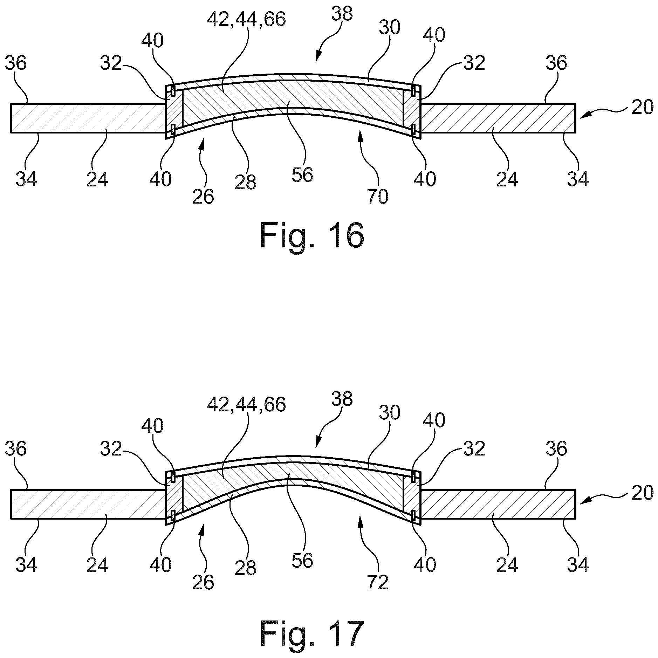

Figures 16 and 17 illustrate the battery cell lid assembly 20 in deformed states.

Such deformations may occur over a lifetime of the battery cell 14. It is noted that the above-described functionalities, in particular the protection against the propagation of a thermal event, are still available in the deformed states.

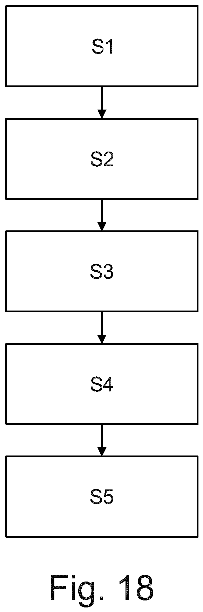

The battery cell lid assembly 20 for the battery cell 14 of the vehicle 10 may be manufactured in accordance with the following method (see also Figure 18).

In a first step S 1 of the method, the carrier plate 24 is provided that comprises the first side 34, the second side 36, and the through hole 38 for the degassing vent 26. The through hole 38 extends from the first side 34 to the second side 36.

In a second step S2 of the method, the first protection wall 28 is mechanically connected to the first side 34 of the carrier plate 24 such that the first protection wall 28 covers the through hole 38. As has been mentioned before, the first protection wall 28 may be mechanically connected to the first side 34 via a reinforcement member 32.

In a third step S3 of the method, at least one filler material 44 is provided. The at least one filler material 44 is positioned between the first protection wall 28 and the second protection wall 30.

In a fourth step S4 of the method, the second protection wall 30 is mechanically connected to the second side 36 of the carrier plate 24 such that the second protection wall 30 covers the through hole 38. Further, the first protection wall 28 and the second protection wall 30 are arranged at the distance A. As has been mentioned before, the second protection wall 30 may be mechanically connected to the second side 36 via a reinforcement member 32.

As a result of the fourth step S4, the filler material is enclosed between the first protection wall 28 and the second protection wall 30.

In a fifth step S5 of the method, the filler material 44 is cured. This step is optional and is only used if the filler material 44 comprises a curable component, e.g. a curable resin.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: battery pack
- 14: battery cell
- 16: gas channel
- 18: enclosure portion
- 20: battery cell lid assembly
- 22: cell chemistry
- 24: carrier plate
- 26: degassing vent
- 28: first protection wall
- 30: second protection wall
- 32: reinforcement member
- 34: first side
- 36: second side
- 38: through hole
- 40: laser weld
- 42: space
- 44: filler material
- 46: sheet
- 48: block
- 50: gas
- 52: liquid
- 54: solid
- 56: gel-type filler material
- 58: predetermined mechanical breaking location
- 60: mechanical reinforcement element
- 66: filler material component
- 68: normal state
- 70: slightly bent state
- 72: strongly bent state

- A: distance

- S1: first step
- S2: second step
- S3: third step
- S4: fourth step
- S5: fifth step

## Claims

1. A battery cell lid assembly (20) for a battery cell (14) of a vehicle (10), the battery cell lid assembly (20) comprising
- a carrier plate (24) comprising a first side (34), a second side (36), and a through hole (38) for a degassing vent (26), the through hole (38) extending from the first side (34) to the second side (36),
- a first protection wall (28) arranged on the first side (34) and at least partially covering the through hole (38), and
- a second protection wall (30) arranged on the second side (36) and at least partially covering the through hole (38),
wherein the first protection wall (28) and the second protection wall (30) are arranged at a distance (A).

2. The battery cell lid assembly (20) of claim 1, further comprising a reinforcement member (32) for the through hole (38), the reinforcement member (32) circumferentially delimiting the through hole (38), wherein the first protection wall (28) and the second protection wall (30) are mechanically connected to the reinforcement member (32).

3. The battery cell lid assembly (20) of any one of the preceding claims, wherein a space (42) between the first protection wall (28) and the second protection wall (30) is filled with a gas (50).

4. The battery cell lid assembly (20) of any one of the preceding claims, wherein a space (42) between the first protection wall (28) and the second protection wall (30) is filled with at least one liquid (52), solid (54) or gel-type (56) filler material (44).

5. The battery cell lid assembly (20) of claim 4, wherein the at least one filler material (44) comprises an endothermic material.

6. The battery cell lid assembly (20) of claim 4 or 5, wherein the at least one filler material (44) comprises an intumescent material.

7. The battery cell lid assembly (20) of any one of the preceding claims, wherein the first protection wall (28) and/or the second protection wall (30) comprises at least one predetermined mechanical breaking location (58) and/or at least one mechanical reinforcement element (60).

8. The battery cell lid assembly (20) of any one of the preceding claims, wherein one of the first protection wall (28) and the second protection wall (30) is permeable for a gas and/or for a liquid.

9. The battery cell lid assembly (20) of any one of the preceding claims, wherein at least one of the first protection wall (28) and the second protection wall (30) is impermeable for a gas and/or a liquid.

10. The battery cell lid assembly (20) of any one of the preceding claims, wherein at least one of the first protection wall (28) and the second protection wall (30) is connected to the carrier plate (24) via a laser weld (40).

11. A battery cell (14) for a vehicle (10), the battery cell (14) comprising
- an enclosure portion (18), wherein the enclosure portion (18) has an opening, and
- a battery cell lid assembly (20) according to any one of the preceding claims, wherein the battery cell lid assembly (20) is mechanically connected to the enclosure portion (18) such that the battery cell lid assembly (20) closes the opening of the enclosure portion (18).

12. A filler material component (66) for a battery cell lid assembly (20) of any one of claims 1 to 10, the filler material component (66) comprising a sheet (46) or block (48) of filler material (44), wherein the filler material (44) is one or more of thermally insulative, intumescent, and endothermic.

13. A battery pack (12) comprising at least one battery cell (14) according to claim 11.

14. A vehicle (10) comprising a battery pack (12) according to claim 13.

15. A method for manufacturing a battery cell lid assembly (20) for a battery cell (14) of a vehicle (10), the method comprising:
- providing a carrier plate (24) comprising a first side (34), a second side (36), and a through hole (38) for a degassing vent (26), the through hole (38) extending from the first side (34) to the second side (36),
- mechanically connecting a first protection wall (28) to the first side (34) of the carrier plate (24) such that the first protection wall (28) covers the through hole (38), and
- mechanically connecting a second protection wall (30) to the second side (36) of the carrier plate (24) such that the second protection wall (30) covers the through hole (38), and such that the first protection wall (28) and the second protection wall (30) are arranged at a distance (A).

## Amended claims

### Amended claims in accordance with Rule 137(2) EPC.

1. A battery cell lid assembly (20) for a battery cell (14) of a vehicle (10), the battery cell lid assembly (20) comprising
- a carrier plate (24) comprising a first side (34), a second side (36), and a through hole (38) for a degassing vent (26), the through hole (38) extending from the first side (34) to the second side (36),
- a first protection wall (28) arranged on the first side (34) and at least partially covering the through hole (38), and
- a second protection wall (30) arranged on the second side (36) and at least partially covering the through hole (38),
wherein the first protection wall (28) and the second protection wall (30) are arranged at a distance (A),
wherein a space (42) between the first protection wall (28) and the second protection wall (30) is filled with at least one liquid (52), solid (54) or gel-type (56) filler material (44), and
wherein the at least one filler material (44) comprises an endothermic material and/or an intumescent material.

2. The battery cell lid assembly (20) of claim 1, further comprising a reinforcement member (32) for the through hole (38), the reinforcement member (32) circumferentially delimiting the through hole (38), wherein the first protection wall (28) and the second protection wall (30) are mechanically connected to the reinforcement member (32).

3. The battery cell lid assembly (20) of any one of the preceding claims, wherein a space (42) between the first protection wall (28) and the second protection wall (30) is filled with a gas (50).

4. The battery cell lid assembly (20) of any one of the preceding claims, wherein the first protection wall (28) and/or the second protection wall (30) comprises at least one predetermined mechanical breaking location (58) and/or at least one mechanical reinforcement element (60).

5. The battery cell lid assembly (20) of any one of the preceding claims, wherein one of the first protection wall (28) and the second protection wall (30) is permeable for a gas and/or for a liquid.

6. The battery cell lid assembly (20) of any one of the preceding claims, wherein at least one of the first protection wall (28) and the second protection wall (30) is impermeable for a gas and/or a liquid.

7. The battery cell lid assembly (20) of any one of the preceding claims, wherein at least one of the first protection wall (28) and the second protection wall (30) is connected to the carrier plate (24) via a laser weld (40).

8. A battery cell (14) for a vehicle (10), the battery cell (14) comprising
- an enclosure portion (18), wherein the enclosure portion (18) has an opening, and
- a battery cell lid assembly (20) according to any one of the preceding claims, wherein the battery cell lid assembly (20) is mechanically connected to the enclosure portion (18) such that the battery cell lid assembly (20) closes the opening of the enclosure portion (18).

9. A battery pack (12) comprising at least one battery cell (14) according to claim 8.

10. A vehicle (10) comprising a battery pack (12) according to claim 9.

11. A method for manufacturing a battery cell lid assembly (20) for a battery cell (14) of a vehicle (10), the method comprising:
- providing a carrier plate (24) comprising a first side (34), a second side (36), and a through hole (38) for a degassing vent (26), the through hole (38) extending from the first side (34) to the second side (36),
- mechanically connecting a first protection wall (28) to the first side (34) of the carrier plate (24) such that the first protection wall (28) covers the through hole (38), and
- mechanically connecting a second protection wall (30) to the second side (36) of the carrier plate (24) such that the second protection wall (30) covers the through hole (38), and such that the first protection wall (28) and the second protection wall (30) are arranged at a distance (A), a space (42) between the first protection wall (28) and the second protection wall (30) being filled with at least one liquid (52), solid (54) or gel-type (56) filler material (44), and the at least one filler material (44) comprising an endothermic material and/or an intumescent material.
